# EUROPÄISCHE PATENTSCHRIFT

(11) **EP 1 056 188 B1**
(45) Veröffentlichungstag und Bekanntmachung des Hinweises auf die Patenterteilung: **21.05.2003**
(21) Anmeldenummer: 00104310.8
(22) Anmeldetag: 02.03.2000
(51) Int. Cl.: H02M 1/00

(54) **Schaltung zur Korrektur des Leistungsfaktors**
Power factor correction circuit
Circuit de correction du facteur de puissance

(30) Priorität: 20.05.1999 DE 19923238
(43) Veröffentlichungstag der Anmeldung: 29.11.2000
(73) Patentinhaber: Patent-Treuhand-Gesellschaft für elektrische Glühlampen mbH, 81543 München (DE)
(72) Erfinder: Lehnert, Klaus, Dr., 01705 Freital (DE); Güldner, Henry, Prof. Dr., 01809 Heidenau (DE); Raiser, Franz, Dr., 80689 München (DE)

(56) Entgegenhaltungen:
- EP-A- 0 253 224
- DE-A- 3 841 227
- US-A- 5 488 269

## Beschreibung

Die vorliegende Erfindung betrifft eine Schaltung zur Korrektur des Leistungsfaktors, und zwar eine Schaltung mit einem Brückengleichrichter mit einem ersten und einem zweiten Eingangsanschluß, wobei zwischen dem ersten und zweiten Eingangsanschluß eine Wechselspannungsquelle anordenbar ist, und mit einem ersten und einem zweiten Ausgangsanschluß, einem Ansteuer- und Lastkreis, mindestens einer Energiespeichervorrichtung, deren erster Anschluß mit einem Anschluß im Ansteuer- und Lastkreis verbunden ist, wobei das im Betrieb an diesem Anschluß abgreifbare Signal eine wesentlich höhere Frequenz aufweist als das Ausgangssignal der Wechselspannungsquelle, und mit einem Speicherkondensator.

Schaltungen zur Korrektur des Leistungsfaktors sind auch unter der Bezeichnung "charge pumps" oder "Pumpschaltungen" bekannt. Sie werden beispielsweise eingesetzt, um der Norm IEC 1000-3-2, in der die Elektroversorgungsunternehmen die zulässigen Netzstromoberschwingungen definiert haben, zu genügen. Demnach ist die Entnahme von hochfrequenter Energie aus dem Stromversorgungsnetz nicht erwünscht. Der Netzstrom, der dem Netz entzogen wird, ist im Optimalfall proportional zur Netzspannung. Eine Proportionalität zwischen Netzstrom und Netzspannung ermöglicht die maximale Energieübertragung pro vorgegebener Leitungsdimensionierung. Blindströme, die bei Unproportionalität zwischen Netzspannung und Netzstrom auftreten würden, würden Leitungsverluste verursachen, die die Leitungen zusätzlich belasten und daher zu einer Störung anderer Verbraucher führen.

Unter anderem werden derartige Schaltungen zur Korrektur des Leistungsfaktors eingesetzt für Vorschaltgeräte zum Betrieb von Gasentladungslampen.

Die vorliegende Erfindung geht aus von einem Stand der Technik wie er bekannt ist beispielsweise aus der EP-A-0 253 224, der DE-A-38 41 227 oder der US-A-5,488,269. Der Stand der Technik gemäß diesen Druckschriften ist als Prinzipschaltung in Fig. 1 dargestellt. Hierin ist eine Wechselspannungsquelle 10, im allgemeinen die Netzspannung, mit den Eingängen 14 und 16 eines Gleichrichters 18 verbunden, der die vier Dioden DG1, DG2, DG3 und DG4 umfaßt.

Zunächst wird auf die in durchgezogenen Strichen dargestellte Schaltungsanordnung Bezug genommen: Eine Energiespeichervorrichtung 20 ist einerseits mit dem Verbindungspunkt zweier Dioden DP1, DP2, andererseits am Anschluß 28 mit einer Hochfrequenzspannungsquelle 22, d.h. einer Wechselspannungsquelle, die im Betrieb ein Signal wesentlich höherer Frequenz bereitstellt als die Wechselspannungsquelle 10, verbunden. Diese Wechselspannungsquelle 22 ist Teil des Ansteuer- und Lastkreises 24, wie durch den Doppelpfeil 26 zum Ausdruck gebracht werden soll. Parallel zum Ansteuer- und Lastkreis 24 ist ein Speicherkondensator CS angeordnet, in den die der Wechselspannungsquelle 10 entnommene Energie zur Versorgung des Ansteuer- und Lastkreises 24 gespeichert wird.

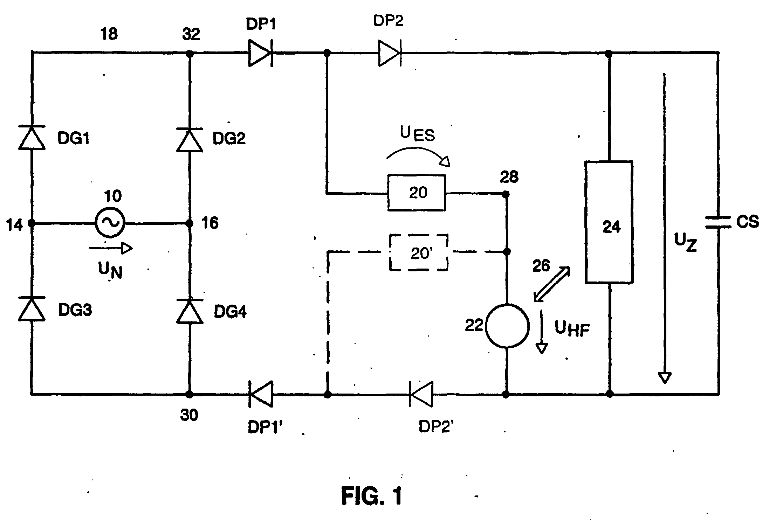

Eine alternative Ausführung ist in Fig. 1 gestrichelt eingezeichnet. Sie umfaßt eine Energiespeichervorrichtung 20', die einerseits mit der Hochfrequenzspannungsquelle 22, andererseits mit dem Verbindungspunkt zweier Dioden DP1', DP2' verbunden ist Die Dioden DP2 und DP2' dienen dazu Rückwirkungen des Ansteuer- und Lastkreises 24 auf die Energiespeichervorrichtung 20 bzw. 20' zu verhindern. Die Dioden DP1, DP1', die gegenüber den Dioden DG1 bis DG4 des Gleichrichters 18 als sogenannte "schnelle Dioden" ausgeführt sind, dienen dazu, ein Pumpen von Energie in die Wechselspannungsquelle 10 hinein zu unterbinden.

In Anbetracht dessen, daß derartige Pumpschaltungen beispielsweise in Vorschaltgeräten zum Betrieb von Gasentladungslampen eingesetzt werden, bei denen es sich um Massenprodukte handelt, fällt dem Kostenaspekt eine bedeutende Rolle zu.

Der vorliegenden Erfindung liegt deshalb die Aufgabe zugrunde, eine Schaltung zur Korrektur des Leistungsfaktors, d.h. eine Pumpschaltung bereitzustellen, die ebenfalls, wie im Stand der Technik bereits gelöst, Rückwirkungen des Ansteuer- und Lastkreises auf die Energiespeichervorrichtung verhindert, sowie ein Pumpen in das speisende Netz unterbindet, die jedoch im Vergleich zu den aus dem Stand der Technik bekannten Pumpschaltungen kostengünstiger realisiert werden kann.

Diese Aufgabe wird gelöst für eine Schaltung der eingangs genannten Art dadurch, daß der Speicherkondensator parallel zu den Ausgangsanschlüssen des Brückengleichrichters angeordnet ist und der zweite Anschluß, der mindestens einen Energiespeichervorrichtung mit einem der beiden Eingangsanschlüsse des Brückengleichrichters verbunden ist.

Diese Schaltung hat den Vorteil, daß die im Stand der Technik mit DP1 und DP2 bzw. DP1'und DP2' bezeichneten Dioden entfallen können. Durch den Entfall dieser Dioden entfällt nicht nur der Materialpreis für die Dioden, sondern auch die entsprechenden Montagekosten.

Die erfindungsgemäße Lösung basiert auf der Idee, die ohnehin vorhandenen Dioden DG1 bis DG4 des Brückengleichrichters zweifach einzusetzen und zwar zunächst in ihrer bekannten Funktion im Brückengleichrichter, dann zusätzlich beim Pumpvorgang.

Die Energiespeichervorrichtung kann mindestens eine Induktivität und/oder mindestens einen Kondensator umfassen. Der Ansteuerteil des Ansteuer- und Lastkreises kann einen Wechselrichter umfassen. Der besagte Anschluß im Ansteuer- und Lastkreis, der im Betrieb ein Signal einer wesentlich höheren Frequenz bereitstellt als die Wechselspannungsquelle kann vom Verbindungspunkt zweier elektrischer Schalter des Wechselrichters gebildet werden.

In einer besonders vorteilhaften Weiterbildung weist die Schaltung eine erste Energiespeichervorrichtung auf, die mit einem der beiden Eingangsanschlüsse des Brückengleichrichters verbunden ist, und eine zweite Energiespeichervorrichtung, die mit dem anderen Eingangsanschluß des Brückengleichrichters verbunden ist. Hierbei können mehrere Energiespeichervorrichtungen mit demselben Anschluß im Ansteuer- und Lastkreis verbunden sein, es kann jedoch auch jede Energiespeichervorrichtung mit einem anderen Anschluß im Ansteuer- und Lastkreis verbunden sein.

Eine besonders vorteilhafte Ausführungsform sieht vor, daß die Spannung des mindestens einen Anschlusses im Ansteuer- und Lastkreis an die Spannung des Speicherkondensators geklemmt ist.

In einer weiteren vorteilhaften Ausführungsform, die die von denselben Erfindern in der DE 19914505.9 offenbarte Lehre auf die vorliegende Erfindung anwendet, umfaßt die Energiespeichervorrichtung eine Induktivität und mindestens einen Kondensator, wobei jeder Kondensator mit seinem ersten Anschluß mit der Induktivität und mit seinem zweiten Anschluß mit einem der beiden Eingangsanschlüsse des Brückengleichrichters verbunden ist und der Verbindungspunkt zwischen Induktivität und jedem Kondensator über jeweils eine Diode mit dem ersten und zweiten Ausgangsanschluß des Brückengleichrichters verbunden ist.

Es ist vorteilhaft, zwischen dem ersten und zweiten Eingangsanschluß des Brückengleichrichters mindestens ein Filter, insbesondere ein Tiefpaßfilter vorzusehen, das in serieller und/oder paralleler Verschaltung zur Wechselspannungsquelle angeordnet wird.

Weitere vorteilhafte Weiterbildungen der Erfindung sind in den Unteransprüchen definiert.

Unter Hinweis auf die beigefügten Zeichnungen werden im folgenden Ausführungsbeispiele der Erfindung näher beschrieben. Es stellen dar:
- Fig. 1: eine Schaltung aus dem Stand der Technik zur Verdeutlichung des Pumpschaltungsprinzips;
- Fig. 2: eine Prinzipschaltung zur Verdeutlichung des erfindungsgemäßen Pumpschaltungsprinzips;
- Fig. 3: eine erste Ausführungsform einer erfindungsgemäßen Schaltung mit einer Energiespeichervorrichtung;
- Fig. 4: eine gegenüber der Ausführungsform von Fig. 3 hinsichtlich des Anschlusses im Ansteuer- und Lastkreis modifizierte Ausführungsform;
- Fig. 5: eine im Hinblick auf Fig. 3 modifizierte Ausführungsform, bei der zwei Energiespeichervorrichtungen vorgesehen sind;
- Fig. 6: eine gegenüber Fig. 5 im Hinblick auf den Anschluß im Ansteuer- und Lastkreis modifizierte Ausführungsform;
- Fig. 7: eine Ausführungsform mit zwei Energiespeichervorrichtungen, die jeweils an unterschiedlichen Stellen im Ansteuer- und Lastkreis bzw. an unterschiedlichen Eingängen des Brückengleichrichters angeschlossen sind.
- Fig. 8: eine Ausführungsform mit zwei zusätzlichen Dioden zum Klemmen des Anschlusses im Ansteuer- und Lastkreis an die Spannung des Speicherkondensators;
- Fig. 9: eine gegenüber der Ausführungsform gemäß Fig. 8 modifizierte Ausführungsform mit zwei Energiespeichervorrichtungen;
- Fig. 10: eine Ausführungsform der Erfindung, bei der die Energiespeichervorrichtung einen Kondensator und eine Spule umfaßt;
- Fig. 11: eine Ausführungsform, bei der die Energiespeichervorrichtung ebenfalls eine Induktivität und einen Kondensator umfaßt, wobei jedoch zusätzlich zwei Dioden vorgesehen sind; und
- Fig. 12: eine gegenüber Fig. 11 um einen zweiten Kondensator erweiterte Ausführungsform, wobei der zusätzliche Kondensator mit dem anderen Eingang des Brückengleichrichters verbunden ist.

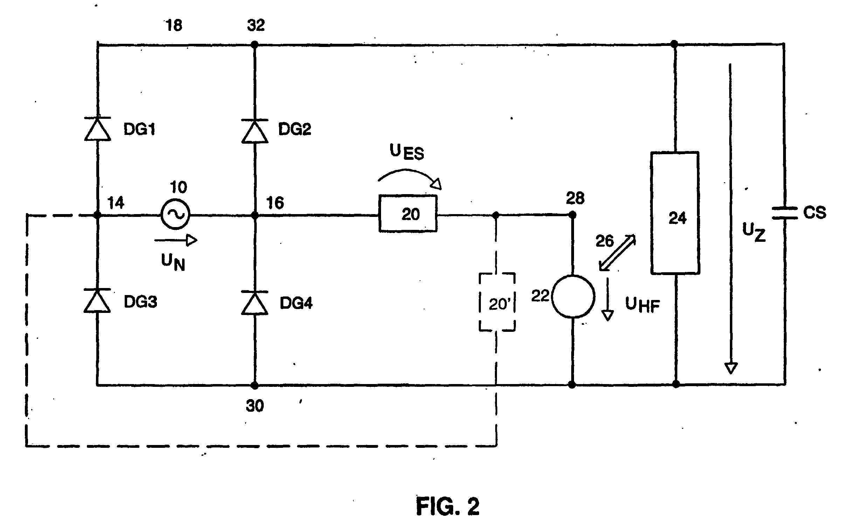

Fig. 2 zeigt eine Prinzipschaltung einer erfindungsgemäßen Pumpschaltung. Hierbei sind Bauteile bzw. Baugruppen, die denen von Fig. 1 gleichen mit identischen Bezugszeichen bezeichnet. Zunächst wird die mit durchgezogenen Linien dargestellte Ausführungsform betrachtet: Im Gegensatz zur Pumpschaltung gemäß Fig. 1 ist nunmehr der zweite Anschluß der Energiespeichervorrichtung 20 mit dem Eingangsanschluß 16 des Brückengleichrichters 18 verbunden, der Speicherkondensator CS liegt parallel zu den Ausgangsanschlüssen 30, 32 des Brückengleichrichters 18. Bei der gestrichelt eingezeichneten Verschaltung, die zusätzlich oder alternativ zur durchgezogenen Verschaltung implementiert werden kann, ist eine Energiespeichervorrichtung 20 mit dem anderen Eingangsanschluß 14 des Brückengleichrichters 18 verbunden. Die jeweils nicht mit dem Brückengleichrichter verbundenen Anschlüsse der Energiespeichervorrichtungen 20, 20' können, wie dargestellt, mit derselben Hochfrequenzspannungsquelle 22 verbunden sein. Sie können jedoch (nicht dargestellt) auch mit jeweils einer anderen Hochfrequenzspannungsquelle verbunden sein. Der Begriff einer Hochfrequenzspannungsquelle ist vorliegend, d.h. im Bereich der Pumpschaltungen, als Anschlußpunkt in einer Schaltung zu verstehen, an dem ein Signal mit einer Frequenz abgegriffen werden kann, die wesentlich höher liegt, als die der Wechselspannungsquelle 10.

Für die nachfolgenden Betrachtungen werden zur Erleichterung des Verständnisses folgende Annahmen getroffen:
- Es wird nur die Variante mit den durchgezogenen Strichen betrachtet.
- Aufgrund des großen Unterschieds der Frequenzen der Spannung U_{N}, bereitgestellt von der Wechselspannungsquelle 10, sowie der Spannung U_{HF}, bereitgestellt von der Wechselspannungsquelle 22, wird der Einfachheit halber davon ausgegangen, daß U_{N} konstant sei. Ein Wechsel von U_{N} kann durch die nachfolgend vorgenommene Fallunterscheidung U_{N} < 0 bzw. U_{N} > 0 berücksichtigt werden. Die nachfolgende Betrachtung untersucht daher eine Periode von U_{HF}, wobei als Ausgangspunkt der jeweiligen Phase 1 angenommen wurde, daß U_{HF} gerade im Sinken begriffen sei.
- Die Energiespeichervorrichtung 20 sei als Kondensator realisiert.
- Die an der Energiespeichervorrichtung 20, d.h. dem Kondensator, abfallende Spannung sei U_{ES}.
- Die am Speicherkondensator CS abfallende Spannung sei U_{Z}.

Zunächst zum Fall A, für den angenommen werden soll, daß U_{N} < 0 sei:
Phase 1: U_{ES} + U_{HF} < - U_{N}
   Hier stellt sich ein Strom ein, der in folgender Masche fließt: Wechselspannungsquelle 10, Kondensator 20, Hochfrequenzspannungsquelle 22, Diode DG3. Da U_{ES} direkt die Differenzspannung im Kreis annimmt, lädt sich der Kondensator 20 auf, wenn U_{HF} kleiner wird. Dabei fließt Energie von U_{N} und U_{HF} auf den Kondensator 20. Dieser Ladevorgang setzt sich fort bis U_{HF} auf ihr Minimum abgesunken ist. Beim Minimum von U_{HF} gilt U_{ES} = U_{N}. Bei einem Ansteigen von U_{HF} nach Durchlaufen des Minimums ist die Bedingung von Phase 1 nicht mehr erfüllt, d.h. die Diode DG3 sperrt.
Phase 2: U_{Z} > U_{ES} + U_{HF} > - U_{N}
   Genügen die auftretenden Spannungen dieser Bedingung, sperren alle Dioden, d.h. es findet kein Stromfluß statt. Weiteres Anwachsen der Spannung U_{HF} führt zur
Phase 3: U_{Z} < U_{ES} + U_{HF}
   Dies führt dazu, daß die Diode DG2 aufmacht, d.h. ein Strom in der Masche -U_{ES}, DG2, U_{Z}, -U_{HF} fließt. Hierdurch wird der Kondensator 20 entladen. Die Energie fließt dabei vom Kondensator 20 und U_{HF} auf den Speicherkondensator CS (CS kann für diese Betrachtung als unendlich groß angenommen werden).
   U_{HF} steigt weiter bis zum Maximum. Anschließend tritt die Schaltung ein in die
Phase 4: U_{Z}>U_{ES}+U_{HF}>-U_{N}
   Jenseits des Maximums von U_{HF} beginnt die Diode DG2 wieder zu sperren. Damit sperren in diesem Zustand alle Dioden, es findet kein Stromfluß statt.
   U_{HF} sinkt anschließend weiter ab bis zum Eintritt der Phase 1, siehe oben.

Im nachfolgenden Fall B sei U_{N} > 0:
Phase 1: U_{ES}+U_{HF}<0
   Es fließt ein Strom in der Masche U_{ES}, U_{HF}, DG4, da in diesem Fall, im Gegensatz zum Fall A, siehe oben, aufgrund der Polarität von U_{N} die Diode DG4 zuerst zu leiten begonnen hat. Hierdurch wird von der Hochfrequenzspannungsquelle U_{HF} der Kondensator 20 geladen, d.h. Energie fließt von U_{HF} auf den Kondensator 20.
   U_{HF} sinkt weiter bis zu ihrem Minimun. Anschließend befindet sich die Schaltung in
Phase2: U_{Z} - U_{N} > U_{ES} + U_{HF} > 0
   In diesem Zustand sperren alle Dioden, es findet kein Stromfluß statt.
   Anschließend steigt U_{HF}. Die Schaltung gerät in die
Phase 3: U_{Z} - U_{N} < U_{ES} + U_{HF}
   Infolge der Potentialverhältnisse an den Anoden von DG1 und DG2 macht die Diode DG1 schneller auf. Es stellt sich ein Stromfluß ein in der Masche -U_{ES}, -U_{N}, DG1, U_{Z}, -U_{HF}. Hierdurch wird der Kondensator 20 entladen: Da sich U_{Z} wegen des großen Speicherkondensators CS nahezu nicht ändert, sinkt bei Anwachsen von U_{HF} U_{ES}. Hierbei fließt Energie von U_{N}, U_{HF}, U_{ES} an U_{Z}.
   Anschließend steigt U_{HF} bis zum Maximum. Nach Durchlaufen des Maximums befindet sich die Schaltung in
Phase 4: U_{Z} - U_{N} > U_{ES} + U_{NF} > 0
   In diesem Zustand sperren alle Dioden, es findet kein Stromfluß statt.
   U_{HF} sinkt anschließend weiter bis zum Eintritt der Schaltung in die Phase 1, siehe oben. Hier beginnt dann wieder die Diode DG4 zu leiten, wenn U_{HF} die Spannung U_{ES} aufwiegt.

Für den Fachmann ist offensichtlich, daß die in Fig. 2 gestrichelt eingezeichnete Variante, bei der eine Energiespeichervorrichtung 20' mit ihrem zweiten Anschluß mit dem Eingangsanschluß 14 des Brückengleichrichters 18 verbunden ist, in entsprechender Weise funktioniert.

Im nachfolgenden werden zur in Fig. 2 dargestellten Prinzipschaltung Ausführungsformen angegeben, die sämtlich auf die Anwendung des erfindungsgemäßen Schaltungsprinzips bei Vorschaltgeräten von Gasentladungslampen ausgerichtet sind. Wie für den Fachmann offensichtlich ist, kann das erfindungsgemäße Schaltungsprinzip jedoch auch auf vielen anderen Gebieten Anwendung finden, so daß die nachfolgenden Ausführungsformen nicht als einschränkend zu betrachten sind.

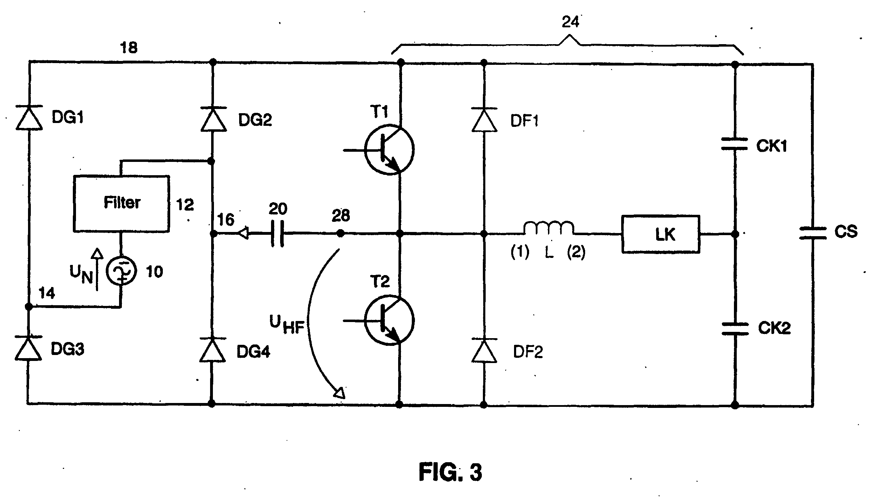

Fig. 3 zeigt eine Ausführungsform, bei der der Ansteuer- und Lastkreis 24 einen Wechselrichter mit zwei Transistoren T1, T2, deren Ansteuerung nur schematisch angedeutet ist, sowie zwei dazu antiparallel geschalteten Freilaufdioden DF1, DF2 umfaßt. Eine Induktivität L ist einerseits mit dem Lampenkreis LK, andererseits mit dem Verbindungspunkt zwischen den beiden Transistoren T1, T2, und den beiden Freilaufdioden DF1, DF2 verbunden. Der andere Anschluß des Lampenkreises LK ist mit dem Verbindungspunkt zweier Koppelkondensatoren CK1, CK2, die dem Speicherkondensator CS parallel geschaltet sind, verbunden. Die Energiespeichervorrichtung 20 ist als Kondensator realisiert. Die in der Prinzipschaltung gemäß Fig. 2 als Hochfrequenzspannungsquelle U_{HF} dargestellte Wechselspannungsquelle 22 wird vom Verbindungspunkt 28 der beiden Transistoren T1, T2 des Ansteuer- und Lastkreises 24 gebildet. Die Betriebsfrequenz der beiden elektrischen Schalter T1, T2, die gegenphasig betrieben werden, ist gegenüber der Frequenz der Wechselspannungsquelle 10 hochfrequent, beispielsweise 50 kHz gegenüber 50 Hz, d.h. die beiden Transistoren werden abwechselnd für jeweils ca. 10 µsec eingeschaltet. Der nicht mit dem Anschluß 28 verbundene Anschluß des Kondensators 20 ist mit dem Eingangsanschluß 16 des Brückengleichrichters 18 verbunden.

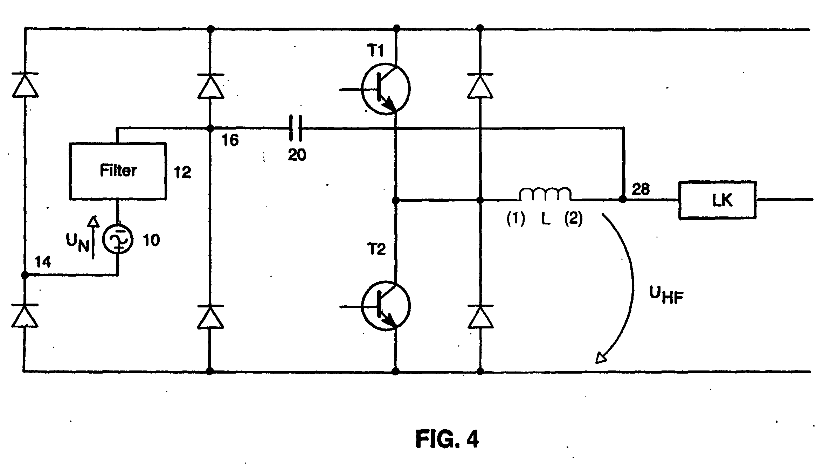

Bei der Ausführungsform gemäß Fig. 4 ist der Kondensator 20 einerseits mit dem Eingangsanschluß 16 des Brückengleichrichters 18 verbunden, andererseits mit dem Anschluß 28, der bei dieser Ausführungsform zwischen der Induktivität L und dem Lampenkreis LK gewählt wurde, da auch an dieser Stelle des Ansteuer- und Lastkreises 24 eine hochfrequente Spannung zum Pumpen von Energie abgegriffen werden kann.

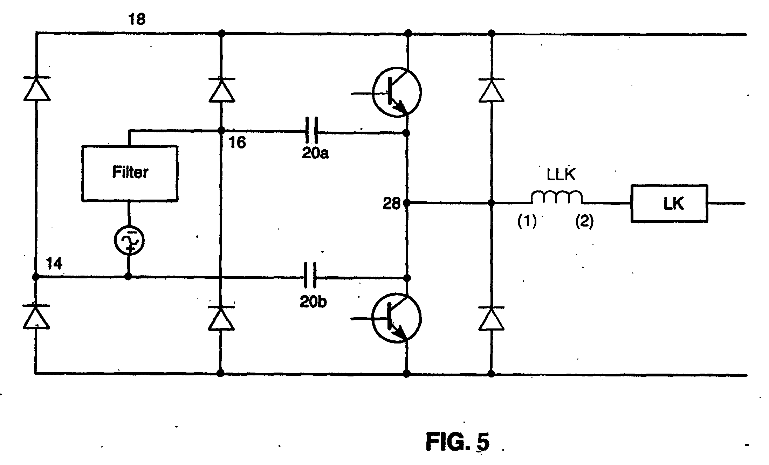

Fig. 5 zeigt eine Ausführungsform mit zwei Energiespeichervorrichtungen 20a, 20b, beispielhaft realisiert jeweils als Kondensator, wobei die eine Energiespeichervorrichtung 20a mit dem einen Eingangsanschluß 16 und die andere Energiespeichervorrichtung 20b mit dem anderen Eingangsanschluß 14 des Brükkengleichrichters 18 verbunden ist. Beide Energiespeichervorrichtungen sind mit ihrem jeweils anderen Anschluß mit einem als Hochfrequenzspannungsquelle wirkenden Anschluß 28 verbunden.

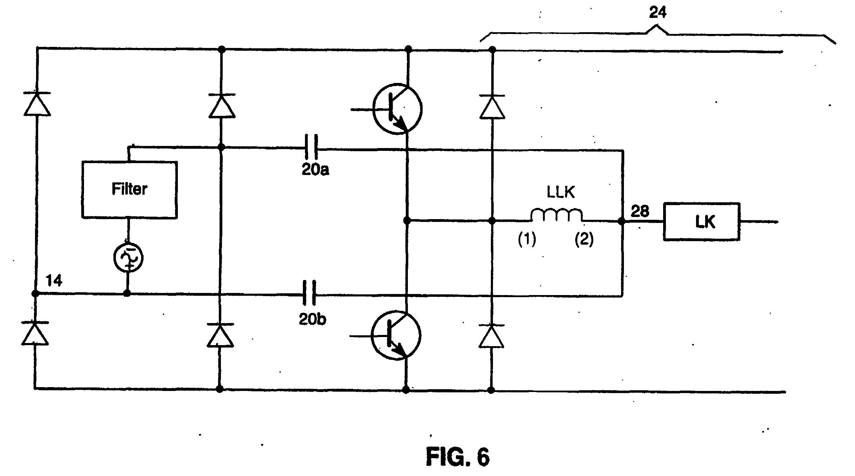

Fig. 6 zeigt eine Variation der in Fig. 5 dargestellten Ausführungsform, bei der die beiden Energiespeichervorrichtungen 20a, 20b mit einer anderen Hochfrequenzspannungsquelle im Ansteuer- und Lastkreis 24 verbunden sind.

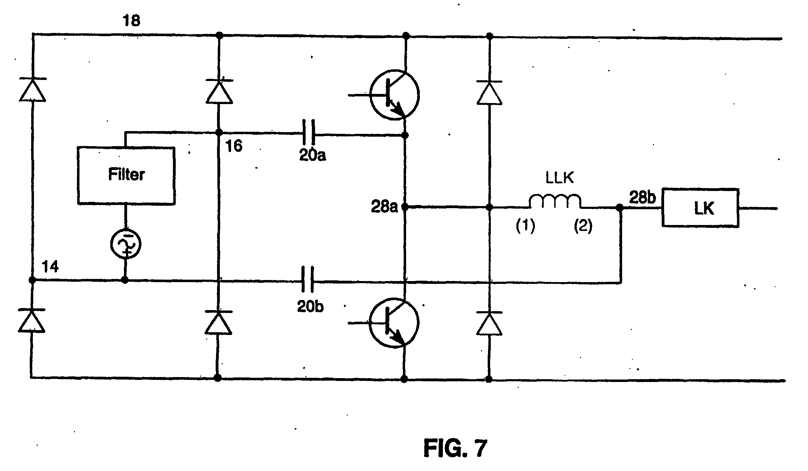

Fig. 7 zeigt eine weitere Modifikation: Hier ist die erste Energiespeichervorrichtung 20a mit einem als Hochfrequenzspannungsquelle wirkenden Anschluß 28a und die zweite Energiespeichervorrichtung 20b mit einem als Hochfrequenzspannungsquelle wirkenden Anschluß 28b verbunden. Der jeweils andere Anschluß der Energiespeichervorrichtungen 20a, 20b ist mit dem Eingangsanchluß 16 bzw. mit dem Eingangsanschluß 14 des Brückengleichrichters 18 verbunden.

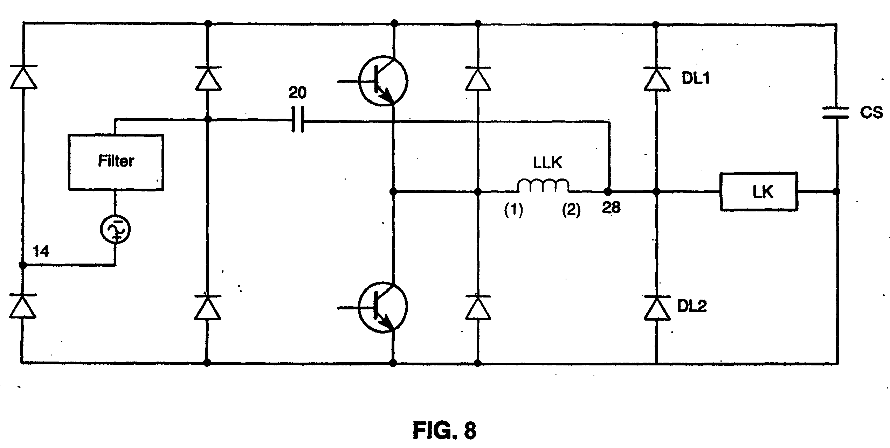

Fig. 8 zeigt eine Ausführungsform, die im Vergleich zur Ausführungsform von Fig. 4 um zwei Dioden DL1, DL2 erweitert ist. Hierdurch wird erreicht, daß die Hochfrequenzspannung am Anschluß 28 an den Speicherkondensator CS geklemmt wird, wodurch Rückwirkungen von der Last ausgeschaltet und eine bezüglich der Hochfrequenzamplitude konstante Spannung am Anschluß 28 erhalten wird.

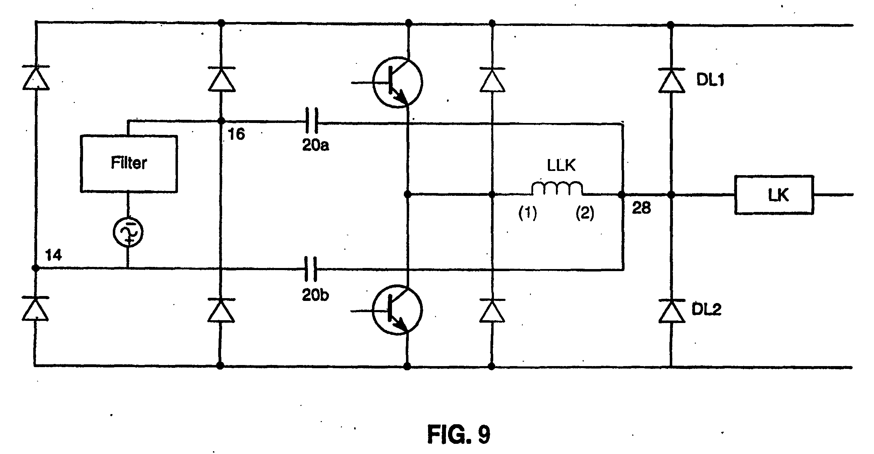

Die in Fig. 9 dargestellte Variation der Ausführungsform von Fig. 8 weist wiederum zwei Energiespeichervorrichtungen 20a, 20b auf, die mit jeweils einem Anschluß mit der Hochfrequenzspannungsquelle am Anschluß 28 und mit ihrem jeweils anderen Anschluß einerseits mit dem Eingangsanschluß 16, andererseits mit dem Eingangsanschluß 14 des Brückengleichrichters verbunden sind.

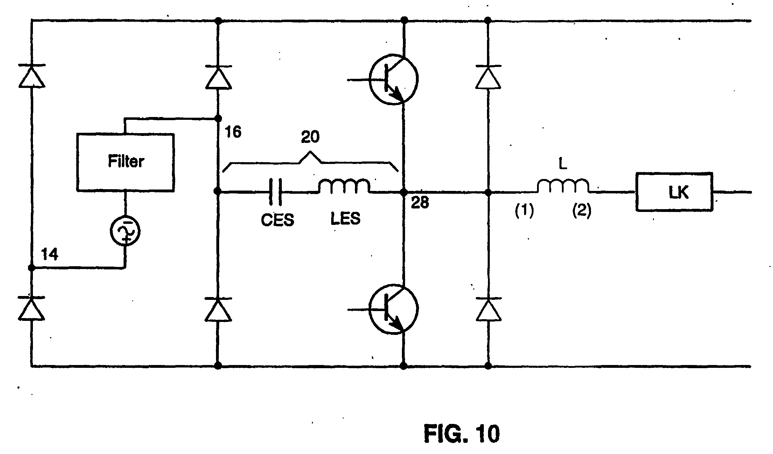

Fig. 10 zeigt eine Ausführungsform, bei der die Energiespeichervorrichtung 20 die Serienschaltung aus einem Kondensator CES und einer Spule LES umfaßt.

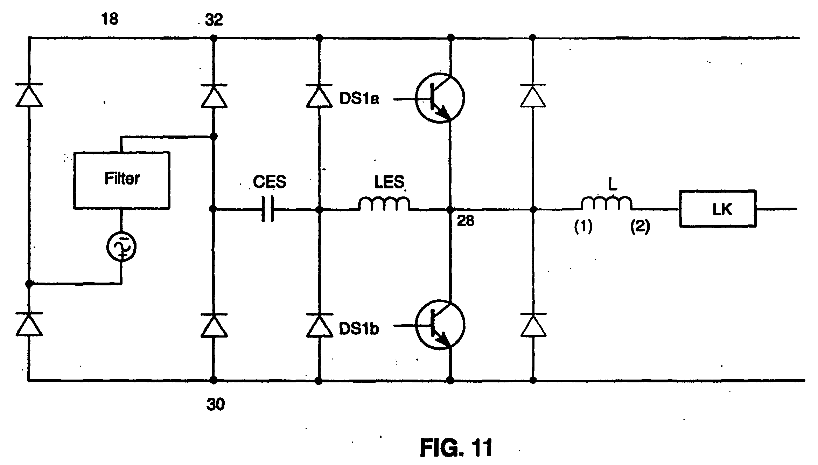

Fig. 11 zeigt eine Ausführungsform, bei der im Vergleich mit der in Fig. 10 dargestellten Ausführungsform am Verbindungspunkt zwischen Kondensator CES und Spule LES der Energiespeichervorrichtung 20 zwei Dioden DS1a, DS1b angeschlossen sind, die jeweils mit ihrem zweiten Anschluß mit den Ausgangsanschlüssen 30, 32 des Brückengleichrichters verbunden sind. Es handelt sich hier um eine Kombination der von denselben Erfindern in der DE 199 14 505.9 beschriebenen Erfindung mit dem Erfindungsgedanken der vorliegenden Erfindung. Die Ausführungen der DE 199 14 505.9 werden hiermit durch Bezugnahme in die vorliegende Offenbarung mitaufgenommen.

Da gegenüber den Ausführungsformen der DE 199 14 505.9 vorliegend erfindungsgemäß die Energiespeichervorrichtung direkt mit einem der Eingangsanschlüsse des Brückengleichrichters 18 angeschlossen ist, sind hier infolge der Variation der Stromflußrichtung durch die Spule LES zwei Dioden DS1a, DS1b nötig. Ebenso wie in Fig. 3 der DE 199 14 505.9 dargestellt, kann der Erfindungsgedanke der vorliegenden Erfindung auf den Fall der Verwendung zweier Energiespeichervorrichtungen erweitert werden:

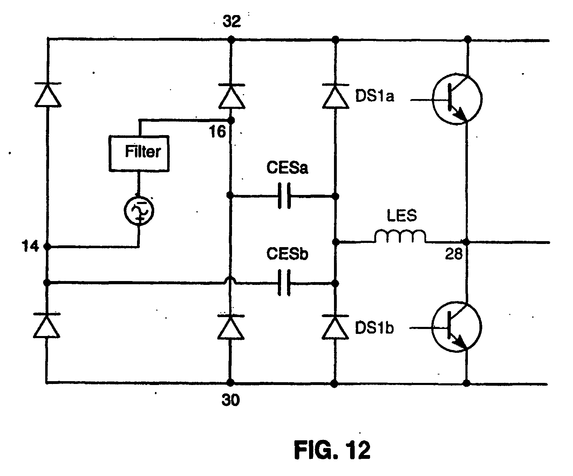

In Fig. 12 umfaßt die Energiespeichervorrichtung zwei Kondensatoren CESa, CESb, die jeweils mit einer Spule L_{ES} verbunden sind, die ihrerseits mit ihrem anderen Anschluß an einen als Hochfrequenzspannungsquelle wirkenden Anschluß 28 angeschlossen ist Der eine Kondensator CESa ist mit seinem von der Spule LES abgekehrten Anschluß mit dem Eingangsanschluß 16, der andere Kondensator CESb mit seinem von der Spule LES abgekehrten Anschluß mit dem Eingangsanschluß 14 des Brückengleichrichters 18 verbunden. Der Verbindungspunkt beider Kondensatoren CESa, CESb mit der Spule LES ist über zwei Dioden DS1a, DS1b mit den Ausgangsanschlüssen 30, 32 des Brükkengleichrichters 18 verbunden.

In den Figuren 3 bis 12 ist die Wechselspannungsquelle 10 jeweils seriell mit einem Filter 12 verschaltet. Dieses Filter 12 hat die Aufgabe, zu verhindern, daß einerseits Hochfrequenzenergie aus der Wechselspannungsquelle 10 entnommen wird, daß andererseits Hochfrequenzsignale in die Wechselspannungsquelle eingespeist werden. In einer einfachen Ausführungsform kann das Filter beispielsweise als Drossel realisiert sein. Alternativ hierzu oder zusätzlich kann ein Filter auch parallel zur Wechselspannungsquelle 10 angeordnet sein, wobei sich bei einer einfachen Realisierung die Verwendung eines Kondensators anbietet Ein derartiges Filter beeinflußt das Pumpprinzip der erfindungsgemäßen Pumpschaltungen nicht.

Für den Fachmann ist offensichtlich, daß Merkmale der einzelnen Ausführungsformen zu weiteren Ausführungsformen kombiniert werden können. Besonders vorteilhaft hat es sich erwiesen zumindest die Dioden DG1 und DG2 als sogenannte "schnelle Dioden" auszuführen.

## Patentansprüche

1. Schaltung zur Korrektur des Leistungsfaktors mit
- einem Brückengleichrichter (18) mit einem ersten und einem zweiten Eingangsanschluß (14, 16), wobei zwischen dem ersten und zweiten Eingangsanschluß (14, 16) eine Wechselspannungsquelle (10) anordenbar ist, und mit einem ersten und einem zweiten Ausgangsanschluß (30, 32),
- einem Ansteuer- und Lastkreis (24),
- mindestens einer Energiespeichervorrichtung (20; 20a; 20b), deren erster Anschluß mit einem Anschluß (28) im Ansteuer- und Lastkreis (24) verbunden ist, wobei das im Betrieb an diesem Anschluß (28) abgreifbare Signal eine wesentlich höhere Frequenz aufweist als das Ausgangssignal der Wechselspannungsquelle (10), und
- einem Speicherkondensator (C_{S}),
**dadurch gekennzeichnet,**
- **daß** der Speicherkondensator (C_{S}) parallel zu den Ausgangsanachlüssen (30, 32) des Brückengleichrichters (18) angeordnet ist, und
- der zweite Anschluß der mindestens einen Energiespeichervorrichtung (20; 20a; 20b) mit einem der beiden Eingangsanschlüsse (14; 16) des Brückengleichrichters (18) verbunden ist.

2. Schaltung nach Anspruch 1, **dadurch gekennzeichnet, daß** die Energiespeichervorrichtung (20; 20a; 20b) mindestens eine Induktivität (LES) und/oder mindestens einen Kondensator (CES, CESa, CESb) umfaßt.

3. Schaltung nach Anspruch 1 oder 2, **dadurch gekennzeichnet, daß** der Ansteuerteil des Ansteuer- und Lastkreises (24) einen Wechselrichter (T1, T2) umfaßt.

4. Schaltung nach Anspruch 3, **dadurch gekennzeichnet, daß** der Anschluß (28) im Ansteuer- und Lastkreis (24) vom Verbindungspunkt zweier elektrischer Schalter (T1, T2) des Wechselrichters gebildet wird.

5. Schaltung nach einem der vorhergehenden Ansprüche, **dadurch gekennzeichnet, daß** die Schaltung eine erste Energiespeichervorrichtung (20a) aufweist, die mit einem der beiden Eingangsanschlüsse (14; 16) des Brückengleichrichters (18) verbunden ist, und eine zweite Energiespeichervorrichtung (20b), die mit dem anderen Eingangsanschluß (16; 14) des Brückengleichrichters (18) verbunden ist.

6. Schaltung nach einem der vorhergehenden Ansprüche, **dadurch gekennzeichnet, daß** mehrere Energiespeichervorrichtungen (20a, 20b) mit demselben Anschluß (28) im Ansteuer- und Lastkreis (24) verbunden sind.

7. Schaltung nach einem der Ansprüche 1 bis 5, **dadurch gekennzeichnet, daß** jede Energiespeichervorrichtung (20a, 20b) mit einem anderen Anschluß (28a, 28b) im Ansteuer- und Lastkreis (24) verbunden ist.

8. Schaltung nach einem der vorhergehenden Ansprüche, **dadurch gekennzeichnet, daß** die Spannung des mindestens einen Anschlusses (28) im Ansteuer- und Lastkreis (24) an die Spannung des Speicherkondensators (CS) geklemmt ist.

9. Schaltung nach einem der vorhergehenden Ansprüche, **dadurch gekennzeichnet, daß** die Energiespeichervorrichtung eine Induktivität LES) und mindestens einen Kondensator (CESa, CESb) umfaßt, wobei jeder Kondensator (CS, CESa, CESb) mit seinem ersten Anschluß mit der Induktivität (LES) und mit seinem zweiten Anschluß mit einem der beiden Eingangsanschlüsse (14; 16) des Brückengleichrichters (18) verbunden ist und der Verbindungspunkt zwischen Induktivität (LES) und jedem Kondensator (CS, CESa, CESb) über jeweils eine Diode (DS1a, DS1b) mit dem ersten und zweiten Ausgangsanschluß (30, 32) des Brückengleichrichters (18) verbunden ist.

10. Schaltung nach einem der vorhergehenden Ansprüche, **dadurch gekennzeichnet, daß** zwischen dem ersten und zweiten Eingangsanschluß (14, 16) des Brückengleichrichters (18) mindestens ein Filter (12), insbesondere ein Tiefpaßfilter, in serieller und/oder paralleler Verschaltung zur Wechselspannungsquelle (10) angeordnet ist.

11. Schaltung nach einem der vorhergehenden Ansprüche, **dadurch gekennzeichnet, daß** die Schaltung Teil eines Vorschaltgeräts zum Betrieb von Gasentladungslampen ist.

## Claims

1. Circuit for power-factor correction having
- a bridge rectifier (18) with a first and a second input connection (14, 16) in which case an AC voltage source (10) can be arranged between the first and the second input connection (14, 16), and having a first and a second output connection (30, 32),
- an actuation and load circuit (24),
- at least one energy storage apparatus, (20; 20a; 20b), whose first connection is connected to a connection (28) in the actuation and load circuit (24), in which case the signal which can be tapped off at this connection (28) in operation is at a considerably higher frequency than the output signal from the AC voltage source (10), and
- an energy storage capacitor (Cₛ),
**characterized in that**
- the energy storage capacitor (Cₛ) is arranged in parallel with the output connections (30, 32) of the bridge rectifier (18), and
- the second connection of the at least one energy storage apparatus (20; 20a; 20b) is connected to one of the two input connections (14; 16) of the bridge rectifier (18).

2. Circuit according to Claim 1, **characterized in that** the energy storage apparatus (20; 20a; 20b) comprises at least one inductance (LES) and/or at least one capacitor (CES, CESa, CESb).

3. Circuit according to Claim 1 or 2, **characterized in that** the actuation part of the actuation and load circuit (24) comprises an inverter (T1 T2).

4. Circuit according to Claim 3, **characterized in that** the connection (28) in the actuation and load circuit (24) is formed by the junction point between two electrical switches (T1 T2) in the inverter.

5. Circuit according to one of the preceding claims, **characterized in that** the circuit has a first energy storage apparatus (20a) which is connected to one of the two input connections (14; 16) of the bridge rectifier (18), and a second energy storage apparatus (20b) which is connected to the other input connection (16; 14) of the bridge rectifier (18).

6. Circuit according to one of the preceding claims, **characterized in that** a plurality of energy storage apparatuses (20a 20b) are connected to the same connection (28) in the actuation and load circuit (24).

7. Circuit according to one of Claims 1 to 5, **characterized in that** each energy storage apparatus (20a, 20b) is connected to a different connection (28a, 28b) in the actuation and load circuit (24).

8. Circuit according to one of the preceding claims, **characterized in that** the voltage at the at least one connection (28) in the actuation and load circuit (24) is clamped to the voltage of the energy storage capacitor (CS).

9. Circuit according to one of the preceding claims, **characterized in that** the energy storage apparatus comprises an inductance (LES) and at least one capacitor (CESa, CESb), in which case the first connection of each capacitor (CS, CESa, CESb) is connected to the inductance (LES), and its second connection is connected to one of the two input connections (14; 16) of the bridge rectifier (18), and the junction point between the inductance (LES) and each capacitor (CS, CESa, CESb) is connected via in each case one diode (DS1a, DS1b) to the first and the second output connection (30, 32) of the bridge rectifier (18).

10. Circuit according to one of the preceding claims, **characterized in that** at least one filter (12), in particular a low-pass filter, is arranged, connected in series and/or parallel with the AC voltage source (10), between the first and the second input connection (14, 16) of the bridge rectifier (18).

11. Circuit according to one of the preceding claims, **characterized in that** the circuit is part of a ballast for operation of gas-discharge lamps.

## Revendications

1. Circuit pour la correction du facteur de puissance, comportant
- un redresseur à pont (18) ayant une première et une deuxième borne d'entrée (14, 16), une source de tension alternative (10) pouvant être placée entre la première et la deuxième borne d'entrée (14, 16), et ayant une première et une deuxième borne de sortie (30, 32),
- un circuit de commande et de charge (24),
- au moins un dispositif de stockage d'énergie (20 ; 20a ; 20b) dont la première borne est reliée à une borne (28) dans le circuit de commande et de charge (24), le signal qui peut être prélevé à cette borne (28) au cours du fonctionnement ayant une fréquence beaucoup plus grande que le signal de sortie de la source de tension alternative (10), et
- un condensateur de stockage (C_{S}),
**caractérisé par le fait que**
- le condensateur de stockage (C_{S}) est branché en parallèle avec les bornes de sortie (30, 32) du redresseur à pont (18), et
- la deuxième borne du ou des dispositifs de stockage d'énergie (20 ; 20a ; 20b) est reliée à l'une des deux bornes d'entrée (14 ; 16) du redresseur à pont (18).

2. Circuit selon la revendication 1, **caractérisé par le fait que** le dispositif de stockage d'énergie (20 ; 20a ; 20b) comprend au moins une inductance (LES) et/ou au moins un condensateur (CES, CESa, CESb).

3. Circuit selon la revendication 1 ou 2, **caractérisé par le fait que** la partie de commande du circuit de commande et de charge (24) comprend un onduleur (T1, T2).

4. Circuit selon la revendication 3, **caractérisé par le fait que** la borne (28) dans le circuit de commande et de charge (24) est formée par le point de jonction de deux interrupteurs électriques (T1, T2) de l'onduleur.

5. Circuit selon l'une des revendications précédentes, **caractérisé par le fait que** le circuit comporte un premier dispositif de stockage d'énergie (20a) qui est relié à l'une des deux bornes d'entrée (14 ; 16) du redresseur à pont (18) et un deuxième dispositif de stockage d'énergie (20b) qui est relié à l'autre borne d'entrée (16 ; 14) du redresseur à pont (18).

6. Circuit selon l'une des revendications précédentes, **caractérisé par le fait que** plusieurs dispositifs de stockage d'énergie (20a, 20b) sont reliés à la même borne (28) dans le circuit de commande et de charge (24).

7. Circuit selon l'une des revendications 1 à 5, **caractérisé par le fait que** chaque dispositif de stockage d'énergie (20a, 20b) est relié à une autre borne (28a, 28b) dans le circuit de commande et de charge (24).

8. Circuit selon l'une des revendications précédentes, **caractérisé par le fait que** la tension du ou des bornes (28) dans le circuit de commande et de charge (24) est appliquée à la tension du condensateur de stockage (CS).

9. Circuit selon l'une des revendications précédentes, **caractérisé par le fait que** le dispositif de stockage d'énergie comprend une inductance (LES) et au moins un condensateur (CESa, CESb), chaque condensateur (CS, CESa, CESb) étant relié par sa première borne à l'inductance (LES) et par sa deuxième borne à l'une des deux bornes d'entrée (14; 16) du redresseur à pont (18) et le point de jonction entre l'inductance (LES) et chaque condensateur (CS, CESa, CESb) étant relié par l'intermédiaire à chaque fois d'une diode (DS1a, DS1b) à la première et à la deuxième borne de sortie (30, 32) du redresseur à pont (18).

10. Circuit selon l'une des revendications précédentes, **caractérisé par le fait qu'**il y a entre la première et la deuxième borne d'entrée (14, 16) du redresseur à pont (18) au moins un filtre (12), notamment un filtre passe-bas, en branchement série et/ou parallèle par rapport à la source de tension alternative (10).

11. Circuit selon l'une des revendications précédentes, **caractérisé par le fait que** le circuit fait partie d'un régulateur de puissance destiné à faire fonctionner des lampes à décharge dans un gaz.
